# EUROPÄISCHE PATENTSCHRIFT

(11) **EP 3 491 978 B1**
(45) Veröffentlichungstag und Bekanntmachung des Hinweises auf die Patenterteilung: **19.06.2024**
(21) Anmeldenummer: 18206642.3
(22) Anmeldetag: 16.11.2018
(51) Int. Cl.: A47J 31/46, A47J 31/60

(54) **EINBAUGERÄT ZUR HERSTELLUNG VON AUFGUSSGETRÄNKEN**
INSTALLATION DEVICE FOR MANUFACTURING POUR-OVER DRINKS
APPAREIL À ENCASTRER DESTINÉ À LA PRÉPARATION DE BOISSONS INFUSÉES

(30) Priorität: 29.11.2017 DE 102017128216
(43) Veröffentlichungstag der Anmeldung: 05.06.2019
(73) Patentinhaber: Miele & Cie. KG, 33332 Gütersloh (DE); Eugster/Frismag AG, 8580 Amriswil (CH)
(72) Erfinder: Kretschmer, Sascha, 33334 Gütersloh (DE); Pötter, Berthold, 33332 Gütersloh (DE); Wüstefeld, Michael, 59555 Lippstadt (DE); Sonderegger, Lukas, 9435 Heerb Heerbrugg (CH)

(56) Entgegenhaltungen:
- EP-A1- 2 253 253
- CN-A- 103 860 018
- CN-A- 106 308 502
- CN-U- 205 758 340
- DE-A1- 1 454 137
- JP-A- H09 192 025
- US-A- 4 194 651
- US-A1- 2009 188 395

## Beschreibung

Die Erfindung betrifft ein Einbaugerät zur Herstellung von Aufgussgetränken nach dem Oberbegriff des Patentanspruches 1.

Aus der EP 2 253 253 A1 ist ganz allgemein ein Getränkebereiter zur Herstellung von Aufgussgetränken bekannt, der in an sich bekannter Weise eine Heizeinrichtung zur Erhitzung von Wasser und/oder zur Herstellung von Wasserdampf umfasst und darüber hinaus eine Brüheinheit zur Aufbereitung des Aufgussgetränkes aufweist. Eine Ausgabevorrichtung dient dabei der Abgabe des in dem Getränkebereiter hergestellten Aufgussgetränkes, wozu diese ferner mindestens einen Getränkeauslass umfasst. Unterhalb des Getränkeauslasses befindet sich eine mit Ablauföffnungen ausgestattete, einen Bestandteil eines Abstellbereiches bildende Abstellfläche, auf der ein mit dem Aufgussgetränk zu befüllendes Gefäß abgestellt werden kann, wobei die Abstellfläche zumindest einen Teil einer Auffangschale zum Sammeln übergelaufener oder verspritzter Flüssigkeitsreste abdeckt. Zur Abführung der Flüssigkeitsreste sind in die Abstellfläche Ablauföffnungen eingebracht. Eine Ventilationseinrichtung innerhalb des Getränkebereiters dient der Trocknung und/oder Abführung von Feuchtigkeit aus dem Innenraum des Getränkebereiters, wobei zur Abführung der Feuchtigkeit an die Umgebung mindestens eine Abluftöffnung vorhanden ist. Die EP 2 253 253 A1 beschreibt dabei eine Lösung, bei der die Abluftöffnung durch mehrere, lamellenartig ausgeführte Schwenkklappen verschließbar ist, was verhindert, dass im geschlossenen Zustand der Schwenkklappen Wasser oder kleine Gegenstände in den Innenraum des Getränkebereiters gelangen und dort möglicherweise Schäden an den vorhandenen Bauteilen verursachen können, die im Extremfall zu einem Ausfall des Gerätes führen könnten. Der in dieser Druckschrift vorgestellte Getränkebereiter ist als freistehendes Einzelgerät ausgeführt. Es sind allerdings auch Getränkebereiter bekannt, die beispielsweise in einen Küchenschrank integriert werden und in diesem Fall als "Einbaugerät" bezeichnet werden.

Die JPH 09192025 A offenbart einen Teebereiter, bei dem ein Teegefäß auf einer Abstellfläche abgestellt ist. Die Abstellfläche ist mit einer Tür verschlossen. Um Bedampfung der Tür zu verhindern, wird der im Teegefäß entstehende Dampf aus dem Aufstellraum abgesaugt und durch einen Auslass an die Geräteoberseite oder Rückseite ausgeblasen.

Das Dokument CN 103860018 A offenbart einen als Standgerät ausgebildeten Getränkebereiter mit einer Auslassvorrichtung zur Getränkeausgabe und eine darunter angebrachte Abstellfläche zum Abstellen einer Tasse. Am Auslass sind ferner Luftdüsen vorhanden, um erhitzte Luft in Richtung Tasse zu blasen, um diese zu erwärmen. Die Luft wird in einem ein durchgehenden Kanal erhitzt.

Insbesondere bei den zuvor erwähnten Einbaugeräten entwickelt sich während der Herstellung von Aufgussgetränken sehr viel Wärme, was zu einer verstärkten Ausbildung von Feuchtigkeit im Innenraum führt, die wegen der Einbausituation nur unter erschwerten Bedingungen an die Umgebung abgeführt werden kann. Es ist vorstellbar, dass bei einem Einbaugerät lediglich die Möglichkeit besteht, die feuchte Luft zur Frontseite hin abzuführen. Dies hat jedoch in nachteiliger Weise zur Folge, dass der Nutzer des Einbaugerätes von dem Feuchtluftstrom angeblasen wird, der sowohl Feuchtigkeit enthält, als auch unangenehme Gerüche aufweisen kann. Es ist vorstellbar, dass dieser Umstand als unangenehm empfunden wird, sodass hier Abhilfe geschaffen werden sollte.

Der Erfindung stellt sich somit das Problem, die aus dem Einbaugerät abzuführende, Feuchtigkeit enthaltende Luft nicht in Richtung des Anwenders abzugeben, sondern hier alternative Möglichkeiten zu schaffen, die zudem möglichst einfach umsetzbar sind.

Erfindungsgemäß wird dieses Problem durch ein Einbaugerät zur Zubereitung von Aufgussgetränken mit den Merkmalen des Patentanspruchs 1 gelöst.

Vorteilhafte Ausgestaltungen und Weiterbildungen der Erfindung ergeben sich aus den nachfolgenden Unteransprüchen.

Ein Einbaugerät zur Herstellung von Aufgussgetränken, umfasst:
- eine Heizeinrichtung zur Erhitzung von Wasser und/oder zur Herstellung von Wasserdampf,
- eine Brüheinheit zur Aufbereitung des Aufgussgetränkes,
- eine Ausgabevorrichtung mit mindestens einem zur Abgabe des in dem Einbaugerät hergestellten Aufgussgetränkes ausgeführten Getränkeauslass,
- eine einen Bestandteil eines Abstellbereiches bildende Abstellfläche, die unterhalb des Getränkeauslasses angeordnet und geeignet ist, ein mit dem Aufgussgetränk zu befüllendes Gefäß abzustellen,
- eine Ventilationseinrichtung zur Trocknung und/oder Abführung innerhalb des Einbaugerätes entstehender Feuchtigkeit, wobei zur Abführung der Feuchtigkeit an die Umgebung mindestens eine Abluftöffnung vorhanden ist.

Hiervon ausgehend wird erfindungsgemäß vorgeschlagen, dass zur Abführung der von der Ventilationseinrichtung erzeugten Feuchtigkeits-Luftströmung an die Umgebung eine Abluftleitung vorhanden ist, deren endseitige Abluftöffnung in Richtung Abstellfläche weist oder gegen eine den Abstellbereich begrenzende Seitenwand gerichtet ist.

Durch die erfindungsgemäße Lösung wird die von der Ventilationseinrichtung erzeugte und Feuchtigkeit enthaltende Luftströmung zunächst in den Türbereich des Einbaugerätes geleitet. Hierzu dient die Abluftleitung, deren endseitige Abluftöffnung die feuchte Luft in Richtung Abstellfläche oder gegen eine den Abstellbereich begrenzende Seitenwand abführt. Dies hat zur Folge, dass sich die Feuchtigkeit unmittelbar auf der Abstellfläche oder an der Seitenwand niederschlägt, dort zu Wassertropfen kondensiert und auf diese Weise letztlich über die in der Abstellfläche vorhandenen Ablauföffnungen in die unterhalb der Abstellfläche vorhandene Abtropfschale gelangt, wo sie gesammelt und zu einem gegebenen Zeitpunkt entsorgt werden kann. Der Erfindung liegt dabei der Lösungsgedanke zu Grunde, das Kondensat bewusst in einen Bereich zu führen, an dem es sich absetzen und kondensieren kann, um von dort in die Abtropfschale zu laufen. Der bisher als unangenehm empfundene, in Richtung des Nutzers des Getränkebereiters austretende Luftstrom ist in dieser Form nicht mehr vorhanden, was eine erhebliche Verbesserung der Nutzungsbedingungen eines erfindungsgemäßen Einbaugerätes darstellt.

Eine erste Ausgestaltung der Erfindung ist darin zu sehen, dass die Abluftöffnung auf die die Rückwand des Abstellbereiches bildende Seitenwand gerichtet ist. Der Luftstrom tritt demnach aus dem Einbaugerät aus und wird anschließend auf die Rückwand geleitet. Bevorzugt weist die Rückwand eine glatte Oberfläche auf, sodass dadurch die Kondensatbildung verbessert und die Abführung des entstehenden Kondensats vereinfacht wird. Diese spezielle Luftführung führt zu einer sehr wesentlichen Komfortverbesserung.

In einem als Einbaugerät ausgeführten Getränkebereiter zur Herstellung von Aufgussgetränken sind sämtliche Aggregate und Einbauten relativ kompakt zusammengefasst, sodass im Innenraum des Einbaugerätes nur wenig Bauraum zur Verfügung steht. Aus diesem Grund ist es von Vorteil, wenn die Abluftleitung als Bestandteil einer das Einbaugerät verschließenden Tür ausgeführt ist. Dies hat zum einen den Vorteil der Bauraumoptimierung und bietet andererseits die Möglichkeit, die Abluftöffnung der Abluftleitung in jedem beliebigen Bereich der Tür vorzusehen, sodass dadurch strömungstechnisch optimale Bedingungen geschaffen werden können.

Wird die Abluftleitung als Bestandteil der Tür ausgeführt, ist es zur Vermeidung des Entweichens der Feuchtigkeit enthaltenden Luft sinnvoll, wenn die Abluftleitung innenseitig des Einbaugerätes einen Dichtungsbereich aufweist, der bei geschlossener Tür unter Bildung einer Dichtung mit einem Luftkanal verbunden ist. Der Luftkanal führt folglich der Abluftleitung die feuchte Luft aus dem Innenraum des Einbaugerätes zu.

Die Zuführung der feuchten Luft aus dem Innenraum des Einbaugerätes über den Luftkanal zur Abluftleitung erfordert zwischen dem Luftkanal und der Ventilationseinrichtung eine strömungsleitende Verbindung. Dies kann im einfachsten Fall dadurch realisiert werden, dass die Ventilationseinrichtung in den Luftkanal integriert ist.

Wie zuvor bereits erwähnt wurde, ist es von Vorteil, wenn die Seitenwände des Abstellbereiches eine möglichst glatte Oberfläche aufweisen, da dies eine Kondensatbildung fördert und die Abführung des entstehenden Wassers erleichtert. Zudem reduziert sich dadurch der entstehende Reinigungsaufwand. Aus dem genannten Grund wird gemäß einer Weiterbildung der Erfindung vorgeschlagen, dass zumindest eine Seitenwand des Abstellbereiches aus Plexiglas besteht oder Teile aus Plexiglas aufweist. Bevorzugt wird der Feuchtigkeit enthaltende Abluftstrom auf diese Plexiglasteile gerichtet.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise einen Blick auf die Frontseite eines als Einbaugerät ausgeführten Getränkebereiters
und
- Figur 2:: ausschnittsweise eine Schnittdarstellung durch den Bereich der Abluftführung innerhalb der Tür des Getränkebereiters.

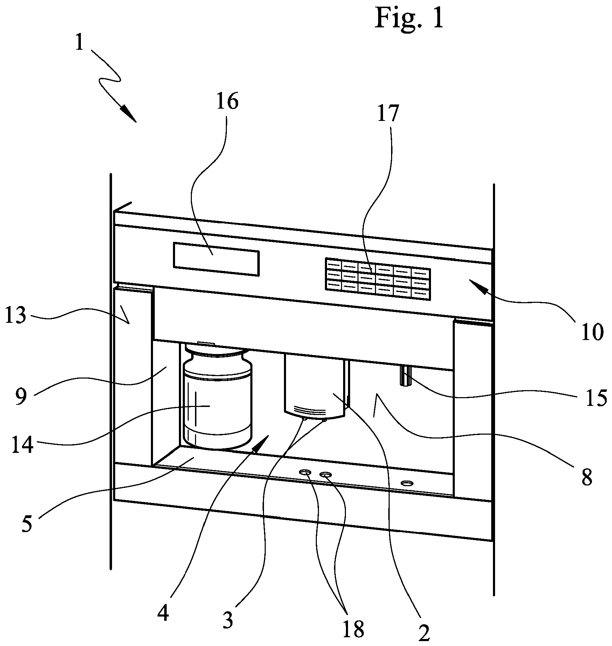

Bei dem in Figur 1 gezeigten Einbaugerät 1 handelt es sich um einen Getränkebereiter zur Herstellung von Aufgussgetränken, also beispielsweise zur Zubereitung von Tee oder Kaffee. Die Besonderheit derartiger Einbaugeräte besteht darin, dass sie in einen Küchenschrank integriert werden und somit platzsparend untergebracht sind. Ein derartiges Einbaugerät 1 weist einen als muldenartige Vertiefung ausgeführten Abstellbereich 4 auf, der von mehreren Seitenwänden begrenzt ist, von denen in der Figur 1 lediglich die Rückwand 8 und eine Seitenwand 9 erkennbar sind. Den unteren Teil des Abstellbereiches 4 bildet eine Abstellfläche 5, auf der ein Trinkgefäß abgestellt werden kann, das mit einem in dem Getränkebereiter hergestellten Aufgussgetränkes befüllt wird. Die Abstellfläche 5 weist darüber hinaus mehrere Ablauföffnungen 18 auf, über die verspritzte oder übergelaufene Flüssigkeitsreste in eine unterhalb der Abstellfläche 5 angeordnete Abtropfschale abgeführt werden können. In den Abstellbereich 4 ist bei dem Beispiel in Figur 1 darüber hinaus ein Milchgefäß 14 integriert, welches hier in eine Aufnahme lösbar eingehängt und somit ohne Berührungskontakt zu der Abstellfläche 5 in dem Abstellbereich 4 aufgenommen ist. Es sind jedoch auch Varianten möglich, bei denen das Milchgefäß 14 auf der Abstellfläche 5 abgestellt wird. Darüber hinaus mündet in den Abstellbereich 4 eine Ausgabevorrichtung 2, an deren Unterseite mehrere Getränkeauslässe 3 vorhanden sind, die der Abgabe der hergestellten Aufgussgetränke oder von Getränkezugaben, wie Milch, oder von Mischgetränken dienen. Seitlich neben der Ausgabevorrichtung 2 ist ferner eine Dampfdüse 15 vorhanden, die zur Erzeugung von Milchschaum nutzbar ist oder der Abgabe von heißen Wasserdampf dient.

Ein derartiges Einbaugerät 1 weist mehrere, als Blenden 13 ausgeführte Verkleidungsteile auf, die hauptsächlich ästhetischen Gesichtspunkten entsprechen. Um den Innenraum eines derartigen Einbaugerätes 1 zugänglich zu machen, ist die gesamte Frontseite als eine Tür 10 ausgeführt, die geöffnet und verschlossen werden kann. Den oberen Abschluss dieser Tür 10 bildet ein Ein- und Ausgabebereich, der bei dem in Figur 1 dargestellten Beispiel eine Anzeige 16 in Form eines Displays und eine Tastatur 17 zur Programmierung beziehungsweise Eingabe von Daten aufweist.

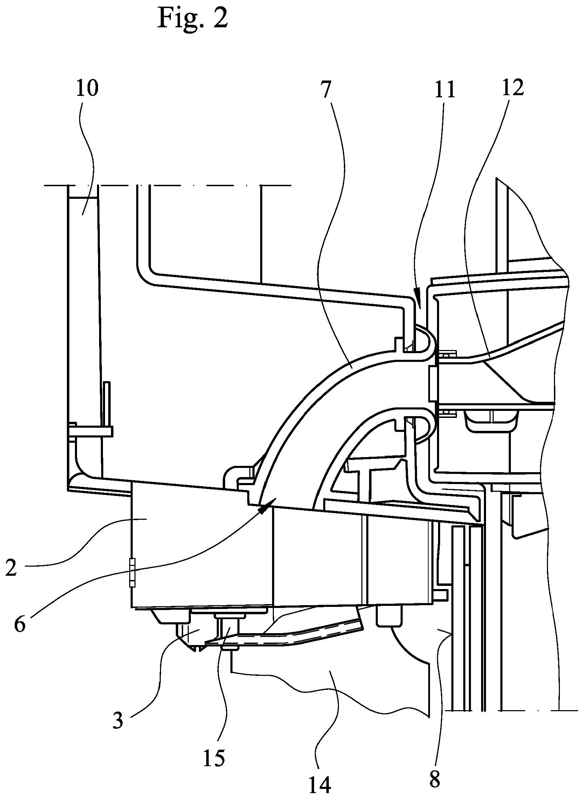

Die erfindungsgemäße Besonderheit lässt sich anschaulich am Beispiel der Schnittdarstellung in Figur 2 erläutern. Der Schnittverlauf liegt dabei seitlich der Dampfdüse 15, sodass im unteren Bereich der Tür 10 das Milchgefäß 14, die Ausgabevorrichtung 2 mit einem Getränkeauslass 3 und die Dampfdüse 15 erkennbar sind. Die Schnittdarstellung der Tür 10 erlaubt einen Blick auf eine Abluftleitung 7, die innerhalb der Tür 10 angeordnet ist. Die endseitig der Abluftleitung 7 vorhandene Abluftöffnung 6 führt die aus dem Innenraum des Einbaugerätes 1 abgeführte, Feuchtigkeit enthaltende Luft unmittelbar in den Bereich der Rückwand 8 ab. Die Rückwand 8 ist dabei aus einem Plexiglas hergestellt, sodass dadurch die Kondensatbildung verbessert wird. Zudem lässt sich eine derart glatte Oberfläche auch leichter reinigen. Das der Abluftöffnung 6 gegenüberliegende Ende der Abluftleitung 7 bildet einen Dichtungsbereich 11, der bei geschlossener Tür 10 unter Bildung einer Dichtung mit einem Luftkanal 12 in Verbindung steht, über den die feuchte Luft aus dem Innenraum des Einbaugerätes 1 zugeführt wird. Zur Erzeugung der hierfür erforderlichen Strömung dient eine in den Figuren nicht gezeigte Ventilationseinrichtung in Form eines Ventilators.

### BEZUGSZEICHENLISTE:

1 Einbaugerät
2 Ausgabevorrichtung
3 Getränkeauslass
4 Abstellbereich
5 Abstellfläche
6 Abluftöffnung
7 Abluftleitung
8 Seitenwand
9 Seitenwand
10 Tür
11 Dichtungsbereich
12 Luftkanal
13 Blende
14 Milchgefäß
15 Dampfdüse
16 Anzeige (Display)
17 Tastatur
18 Ablauföffnungen

## Patentansprüche

1. Einbaugerät (1) zur Herstellung von Aufgussgetränken, umfassend:
- eine Heizeinrichtung zur Erhitzung von Wasser und/oder zur Herstellung von Wasserdampf,
- eine Brüheinheit zur Aufbereitung des Aufgussgetränkes,
- eine Ausgabevorrichtung (2) mit mindestens einem zur Abgabe des in dem Einbaugerät (1) hergestellten Aufgussgetränkes ausgeführten Getränkeauslass (3),
- eine einen Bestandteil eines Abstellbereiches (4) bildende Abstellfläche (5), die unterhalb des Getränkeauslasses (3) angeordnet und geeignet ist, ein mit dem Aufgussgetränk zu befüllendes Gefäß abzustellen,
- eine Ventilationseinrichtung zur Trocknung und/oder Abführung innerhalb des Einbaugerätes (1) entstehender Feuchtigkeit, wobei zur Abführung der Feuchtigkeit an die Umgebung mindestens eine Abluftöffnung (6) vorhanden ist,
**dadurch gekennzeichnet, dass**
zur Abführung der von der Ventilationseinrichtung erzeugten Feuchtigkeits-Luftströmung an die Umgebung eine Abluftleitung (7) vorhanden ist, deren endseitige Abluftöffnung (6) in Richtung Abstellfläche (5) weist oder gegen eine den Abstellbereich (4) begrenzende Seitenwand (8, 9) gerichtet ist.

2. Einbaugerät nach Anspruch 1,
**dadurch gekennzeichnet, dass**
die Abluftöffnung (6) auf die die Rückwand des Abstellbereiches bildende Seitenwand (8) gerichtet ist.

3. Einbaugerät nach einem der vorstehend genannten Ansprüche,
**dadurch gekennzeichnet, dass**
die Abluftleitung (7) Bestandteil einer das Einbaugerät (1) verschließenden Tür (10) ist.

4. Einbaugerät nach Anspruch 3,
**dadurch gekennzeichnet, dass**
die Abluftleitung (7) innenseitig des Einbaugerätes (1) einen Dichtungsbereich (11) aufweist, der bei geschlossener Tür (10) unter Bildung einer Dichtung mit einem Luftkanal (12) verbunden ist.

5. Einbaugerät nach Anspruch 4,
**dadurch gekennzeichnet, dass**
zwischen dem Luftkanal (12) und der Ventilationseinrichtung eine strömungsleitende Verbindung besteht.

6. Einbaugerät nach einem der vorstehend genannten Ansprüche,
**dadurch gekennzeichnet, dass**
zumindest eine Seitenwand (8, 9) des Abstellbereiches aus Plexiglas besteht oder Teile aus Plexiglas aufweist.

## Claims

1. Installation apparatus (1) for producing infusion beverages, comprising:
- a heating device for heating water and/or for producing water vapour,
- a brewing unit for processing the infusion beverage,
- an output means (2) having at least one beverage outlet (3) designed for dispensing the infusion beverage produced in the installation apparatus (1),
- a storage surface (5) which forms a part of a storage region (4) and is arranged below the beverage outlet (3) and is suitable for storing a vessel to be filled with the infusion beverage,
- a ventilation device for drying and/or dissipating moisture occurring within the installation apparatus (1), at least one exhaust air opening (6) being present in order to dissipate the moisture to the surroundings,
**characterised in that**
an exhaust air conduit (7) is provided for dissipating the moisture air flow generated by the ventilation device to the surroundings, the end-side exhaust air opening (6) of which points in the direction of the storage surface (5) or is directed towards a side wall (8, 9) which delimits the storage region (4).

2. Installation apparatus according to claim 1,
**characterised in that**
the exhaust air opening (6) is directed towards the side wall (8) forming the rear wall of the storage region.

3. Installation apparatus according to either of the preceding claims,
**characterised in that**
the exhaust conduit (7) is a part of a door (10) that closes the installation apparatus (1).

4. Installation apparatus according to claim 3,
**characterised in that**
the exhaust air conduit (7) has a sealing region (11) on the inner side of the installation apparatus (1) which, when the door (10) is closed, is connected to an air duct (12), forming a seal.

5. Installation apparatus according to claim 4,
**characterised in that**
there is a flow-conducting connection between the air duct (12) and the ventilation device.

6. Installation apparatus according to any of the preceding claims,
**characterised in that**
at least one side wall (8, 9) of the storage region is made of plexiglass or has parts made of plexiglass.

## Revendications

1. Appareil encastrable (1) permettant de produire des boissons infusées, comprenant :
- un moyen de chauffage permettant de chauffer de l'eau et/ou de produire de la vapeur d'eau,
- une unité d'infusion permettant de préparer la boisson infusée,
- un dispositif de distribution (2) comportant au moins une sortie de boisson (3) conçue pour délivrer la boisson infusée produite dans l'appareil encastrable (1),
- une surface de pose (5) formant une partie d'une zone de pose (4), disposée en dessous de la sortie de boisson (3) et adaptée pour poser un récipient à remplir avec la boisson infusée,
- un moyen de ventilation permettant de sécher et/ou d'évacuer l'humidité se formant à l'intérieur de l'appareil encastrable (1), dans lequel au moins une ouverture d'évacuation d'air (6) est prévue pour l'évacuation de l'humidité vers l'environnement,
**caractérisé en ce que**
pour l'évacuation de l'écoulement d'air humide généré par le moyen de ventilation vers l'environnement, une conduite d'évacuation d'air (7) est prévue, dont l'ouverture d'évacuation d'air (6) côté extrémité est orientée en direction de la surface de pose (5) ou est dirigée contre une paroi latérale (8, 9) délimitant la zone de pose (4).

2. Appareil encastrable selon la revendication 1,
**caractérisé en ce que**
l'ouverture d'évacuation (6) est dirigée vers la paroi latérale (8) formant la paroi arrière de la zone de pose.

3. Appareil encastrable selon l'une des revendications précédentes précitées,
**caractérisé en ce que**
la conduite d'évacuation d'air (7) fait partie d'une porte (10) fermant l'appareil encastrable (1).

4. Appareil encastrable selon la revendication 3,
**caractérisé en ce que**
la conduite d'évacuation d'air (7) présente, côté intérieur de l'appareil encastrable (1), une zone d'étanchéité (11) qui, lorsque la porte (10) est fermée, est reliée à un canal d'air (12) en formant un joint.

5. Appareil encastrable selon la revendication 4,
**caractérisé en ce que**
il existe une liaison conductrice d'écoulement entre le canal d'air (12) et le moyen de ventilation.

6. Appareil encastrable selon l'une des revendications précédentes précitées,
**caractérisé en ce que**
au moins une paroi latérale (8, 9) de la zone de pose est constituée de plexiglas ou présente des parties en plexiglas.
